# EUROPÄISCHE PATENTSCHRIFT

(11) **EP 1 738 816 B1**
(45) Veröffentlichungstag und Bekanntmachung des Hinweises auf die Patenterteilung: **01.02.2012**
(21) Anmeldenummer: 06115710.3
(22) Anmeldetag: 20.06.2006
(51) Int. Cl.: B01D 46/24

(54) **Luftentölelement**
Air de-oiling element
Déshuileur d'air

(30) Priorität: 29.06.2005 DE 202005010340 U
(43) Veröffentlichungstag der Anmeldung: 03.01.2007
(73) Patentinhaber: MANN+HUMMEL GmbH, 71638 Ludwigsburg (DE)
(72) Erfinder: Heikamp, Wolfgang, 67165, Waldsee (DE); Hirsch, Melanie, 67346, Speyer (DE); Winter, Hans-Michael, 67373, Dudenhofen (DE); Eppel, Otto, 67346, Speyer (DE); Staudenmayer, Bernhard, 67373, Dudenhofen (DE); Böhl, Bruno, 67376, Harthausen (DE)

(56) Entgegenhaltungen:
- EP-A1- 0 880 987
- WO-A-95/09037
- US-A- 4 210 538
- US-A1- 2004 065 602

## Beschreibung

### Technisches Gebiet

Die Erfindung betrifft ein Luftentölelement nach dem Oberbegriff des Anspruches 1.

### Stand der Technik

Es sind Luftentölelemente bekannt, welche über ein ringförmig geschlossenes Filtermedium, einen Boden, einen Flansch und einen Außenmantel verfügen. Der Außenmantel ist mit dem Flansch verschweißt. Nach dem Verschweißen werden die Bauteile galvanisch verzinkt. Nachteilig bei diesem Verfahren ist, dass die überlappenden Bereiche des Flansches bzw. des Außenmantels unbehandelt bleiben. Weiterhin lässt sich die Beize des Galvanikbades aus den engen Spalten zwischen dem Flansch und dem Außenmantel nicht vollständig entfernen. Dies führt zu Korrosionsstellen an dem Luftentölelement, welche die Lebensdauer erheblich reduzieren. Weiterhin ist die Galvanik bezüglich des Umweltschutzes und des Arbeitsschutzes problematisch.

Aus der US 2004/065602 A1 ist eine Filtereinheit bekannt, die ein Gehäuseteil aus Kunststoff und ein Filterelement um ein Mittelrohr aus Metall umfasst.

Aus der EP 0880987 A1 ist ein Wechselfilter mit einem Filtermedium um eine Mittelrohreinheit herum bekannt.

Aus der US 4210538 A ist ein Flüssigfilter zur Entfernung von Partikeln aus einer Flüssigkeit bei galvanischen Prozessen bekannt. Mehrere Kunststoffrohre sind dabei von Filtermedium umgeben und können rückgespült werden.
Aus der WO 95/09037 A ist eine zusammenschnappbare Vollkunststoffeinheit mit einem Filtermedium um ein Mittelrohr als Filtereinheit bekannt.
Aufgabe der Erfindung ist es, ein Luftentölelement zu schaffen, welches einerseits korrosionsbeständig ist und eine geringere Belastung für die Umwelt und die in der Produktion arbeitenden Personen darstellt. Diese Aufgabe wird durch die Merkmale des Anspruches 1 gelöst.

### Offenbarung der Erfindung

Das erfindungsgemäße Luftentölelement ist für die Entölung von Luft vorgesehen, welche Kompressoren zugeführt wird. Das Luftentölelement weist einen Flansch, einen Außenmantel und ein Filtermedium auf. Das Filtermedium ist derart ausgeführt, dass sich die in der Luft enthaltenen Öltröpfchen abscheiden. Hierzu kann dass Filtermedium z.B. ein Luftentölelement aus einem Glasfaser-Papier-Vlies sein, wobei jedoch alle im Stand der Technik verfügbaren Filtermedien verwendet werden können. Bei einem sehr großen Ölangebot in der Luft kann es sinnvoll sein, dass ein Vorabscheider vorgesehen ist, welcher z.B. aus einem Polyester-Vlies besteht. Der Außenmantel ist unlösbar mit dem Flansch verbunden, wobei der Außenmantel und der Flansch aus einem korrosionsbeständigen Material mit einem Aluminium-Anteil bestehen. Dieses Material ist auch bei der Einwirkung von hoher Luftfeuchtigkeit und aggressiver Seeluft beständig. Der ringförmig geschlossene Außenmantel, welcher für die Luft durchlässig ist, und der Flansch sind unlösbar durch eine formschlüssige Verbindung miteinander verbunden. Die formschlüssige Verbindung ist durch ein mechanisches Umformen des Flansches bzw. des Außenmantels erzeugt. Durch das mechanische Umformen werden die Materialeigenschaften bzw. die Oberfläche nicht verändert. Somit ist das Luftentölelement auch bei Überseetransporten ohne besondere Schutzmaßnahmen oder bei hohen Luftfeuchtigkeiten beständig und oxidiert nicht. Weiterhin verfügt das Luftentölelement über einen hohen Lagerschutz und eine längere Standzeit gegenüber herkömmlichen Luftentölelementen, welche bereits während der Lagerung, also noch vor deren Einsatz oxidieren.

Gemäß einer besonderen Ausgestaltung der Erfindung ist die formschlüssige Verbindung zwischen dem Flansch und dem Außenmantel durch eine umlaufende Sicke gebildet. Hierbei wird eine leimdichte Verbindung zwischen dem Außenmantel und dem Flansch erzeugt. Die Wand des Außenmantels verfügt im Bereich der Sicke über einen Absatz. Dieser greift in einen Ansatz an dem Flansch ein, wodurch in diesem Bereich eine Verpressung der beiden Bauteile erfolgt. Diese Verpressung erzeugt eine leimdichte Verbindung, wodurch das Filtermedium in den Flansch eingeklebt werden kann, ohne dass Leimreste entfernt werden müssen. Weiterhin ist die durch die Sicke gebildete Verbindung auch durch Vibrationen unlösbar.

Bei einer alternativen Ausgestaltung ist die formschlüssige Verbindung zwischen dem Flansch und dem Außenmantel durch partielle Clinch-Punkte gebildet. Hierbei ist der ringförmig geschlossene Außenmantel mit einer Presspassung auf den Flansch gesteckt, wodurch eine leimdichte Verbindung gebildet wird. Diese leimdichte Verbindung ist für das Verbinden des Filtermediums mit dem Flansch von Bedeutung, damit der für die Verbindung erforderliche Leim in dem Flansch verbleibt und nicht wegfließt. Damit sich der Flansch durch Vibrationen nicht von dem Flansch löst, sind die Clinch-Punkte vorgesehen. Hierbei sind mindestens drei Clinch-Punkte am Umfang verteilt angeordnet. Die Anzahl und Größe der Clinch-Punkte ist abhängig von den mechanischen Belastungen, welche auf die Verbindung wirken. Bei den Clinch-Punkten greift ein nach innen geformter Teil des Außenmantels in die Wand des Flansches ein, wodurch eine unlösbare Verbindung erzeugt ist.

Bei einer Weiterbildung der Erfindung verfügt der Außenmantel über einen Längsfalz, welcher den Außenmantel ringförmig verschließt. Der Außenmantel wird von einer rechteckigen Platte gebildet, welche zu einem Zylinder geschlossen wird. Die aufeinander treffenden Längskanten werden umgebördelt, wodurch eine feste Verbindung erzeugt wird und der Außenmantel somit einfach herstellbar ist.

Bei einer Weiterbildung der Erfindung verfügt der Außenmantel im Bereich des Längsfalzes über einen ausgeklinkten Bereich. In diesem Bereich sind die Außenkanten des Außenmantels nicht miteinander verbunden, sondern liegen aneinander an. Beim Umbördeln des Außenmantels am Boden verfügt der Außenmantel somit über eine umlaufende einfache Wanddicke. Somit kann der Außenmantel mit gleich bleibender Kraft umgebördelt werden, da eine vierfache Materialanhäufung vermieden wird.

Es ist vorteilhaft, dass der Außenmantel perforiert ist, wodurch die zu entölende Luft mit einem geringen Widerstand durch den Außenmantel hindurchströmen kann. Im Bereich der Verbindung mit dem Flansch ist der Außenmantel perforationsfrei ausgeführt, wodurch der zur Befestigung des Filtermediums erforderliche Leim innerhalb des Außenmantels verbleibt und die Außenfläche des Luftentölelementes nicht verunreinigt.

Bei einer besonderen Ausgestaltung der Erfindung bestehen der Flansch und der Außenmantel aus Galfan. Dieses Material ist besonders beständig und kann mechanisch leicht umgeformt werden.

### Kurze Beschreibung der Zeichnungen

Weitere Einzelheiten der Erfindung werden nachfolgend anhand von schematischen Darstellungen erläutert. Hierbei zeigt

Figur 1 ein Luftentölelement in perspektivischer Ansicht,

Figur 2 einen Ausschnitt aus einem Luftentölelement,

Figur 3 einen Ausschnitt eines Außenmantels,

Figur 4 einen Zuschnitt eines Außenmantels und

Figur 5 einen Falz im Schnitt.

### Ausführungsform(en) der Erfindung

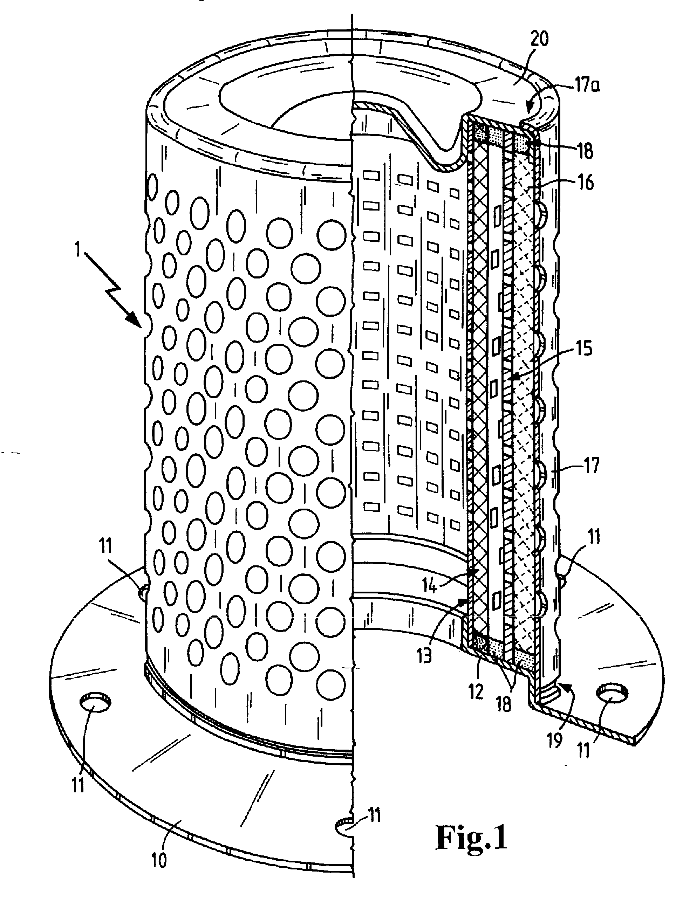

In Figur 1 ist ein Luftentölelement 1 in perspektivischer Ansicht dargestellt, wobei ein Segment herausgeschnitten ist. Das Luftentölelement 1 verfügt über einen Flansch 10 mit am Umfang verteilt angeordnete Befestigungsbohrungen 11. Durch die Befestigungsbohrungen 11 können Schrauben (nicht dargestellt) hindurch gesteckt werden um das Luftentölelement 1 in einem Gehäuse (nicht dargestellt) zu fixieren. Der Flansch 10 verfügt über eine Aufnahme 12, in welcher ein Stützrohr 13, ein Abscheideelement 14, ein Stützkörper 15 und ein Entölelement 16 angeordnet sind. Die Aufnahme 12 des Flansches 10 wird durch einen Außenmantel 17, welcher für das zu reinigende Fluid durchlässig ist, begrenzt. Das Entölelement 16 wird durch den Stützkörper 15 stabilisiert, wobei der Stützkörper 15 für das zu entölende Fluid, insbesondere Luft, durchlässig ist. An dem Entölelement 16, welches z.B. ein gewickeltes oder gefaltetes Faservlies sein kann, scheiden sich die in der Luft enthaltene Öltröpfchen ab. An dem Abscheideelement 14 werden weitere Verunreinigungen aus dem Luftstrom abgeschieden, wobei sich das Abscheideelement 14 an dem luftdurchlässigen Stützrohr 13 abstützt. Das Abscheideelement 14 kann aus einem beliebigen Filtermedium gebildet werden, welches gewickelt oder gefaltet sein kann. Das Stützrohr 13, das Abscheideelement 14, der Stützkörper 15 und das Entölelement 16 sind mit einem Kleber 18 in der Aufnahme 12 fixiert. Damit der Kleber 18 nicht aus der Aufnahme 12 heraus fließt, bildet der Außenmantel 17 mit dem Flansch 10 eine leimdichte Verbindung, welche durch eine umlaufende Sicke 19 gebildet ist. Die Sicke 19 ist durch ein mechanisches Umformen des Außenmantels 17 und Flansches 10 gebildet, wodurch die Teile formschlüssig ineinander greifen und so unlösbar miteinander verbunden sind. Weiterhin ist der zylindrisch ausgeführte Außenmantel 17 mit einem Boden 20 verbunden, welcher an der, dem Flansch 10 gegenüberliegenden Stirnseite angeordnet ist. Der Boden 20 wird durch eine Umbördelung 17a des Außenmantels 17 mechanisch gesichert. Das Stützrohr 13, das Abscheideelement 14, der Stützkörper 15 und das Entölelement 16 sind ebenfalls dichtend in den Boden 20 eingeklebt. Der Flansch 10, der Außenmantel 17 und der Boden 20 bestehen aus einem korrosionsbeständigen Material, welches über gute Umformeigenschaften verfügt. Hierzu kann z.B. Galfan, ein hoch korrosionsbeständiges Metall, verwendet werden.

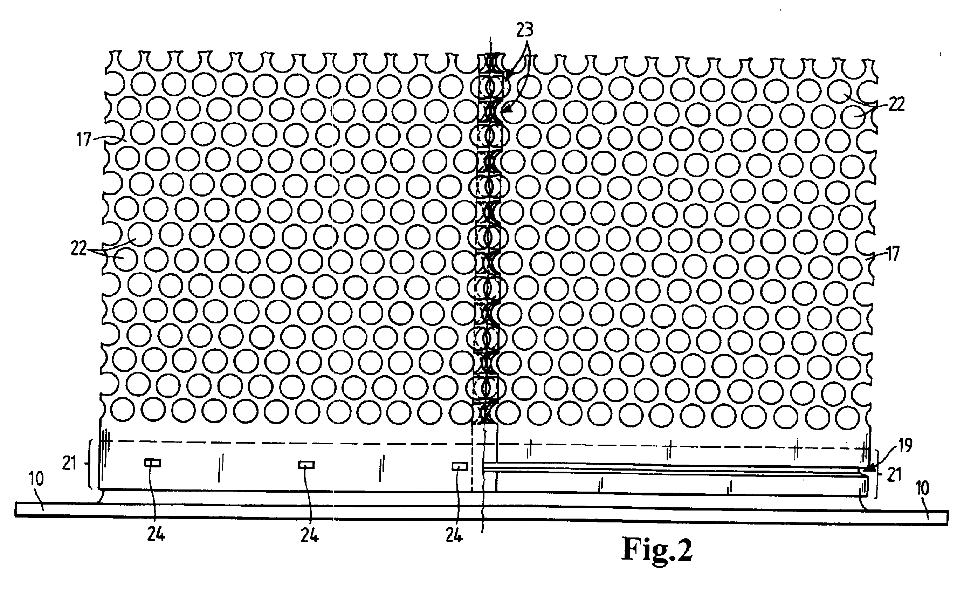

In Figur 2 ist ein Ausschnitt aus einem Luftentölelement 1 gemäß Figur 1 dargestellt, wobei die linke Bildhälfte eine alternative Ausgestaltung zeigt. Der Figur 1 entsprechende Bauteile sind mit gleichen Bezugszeichen versehen. Auf der rechten Bildhälfte ist der Außenmantel 17 mit der Sicke 19 mit dem Flansch 10 verbunden. Der Außenmantel 17 verfügt über einen undurchlässigen Bereich 21, in welchem keine Löcher 22 angeordnet sind. Somit kann der Kleber 18 gemäß Figur 1 nicht aus der Aufnahme 12 herauslaufen und die Außenflächen des Flansches 10 bzw. des Außenmantels 17 verunreinigen. Der Außenmantel 17 ist mit einem Längsfalz 23 ringförmig geschlossen, wodurch das Material umgeformt und keinen thermischen Einflüssen ausgesetzt wurde.

Auf der linken Bildhälfte ist eine alternative Ausgestaltung der Verbindung von dem Flansch 10 und dem Außenmantel 17 dargestellt. Bei dieser Ausführung ist der Außenmantel 17 mit einer Presspassung auf den Flansch 10 aufgepresst und mit am Umfang verteilt angeordneten Clinch-Punkten 24 unlösbar befestigt. Die leimdichte Verbindung wird durch den nicht perforierten Bereich 21 und die Presspassung gebildet.

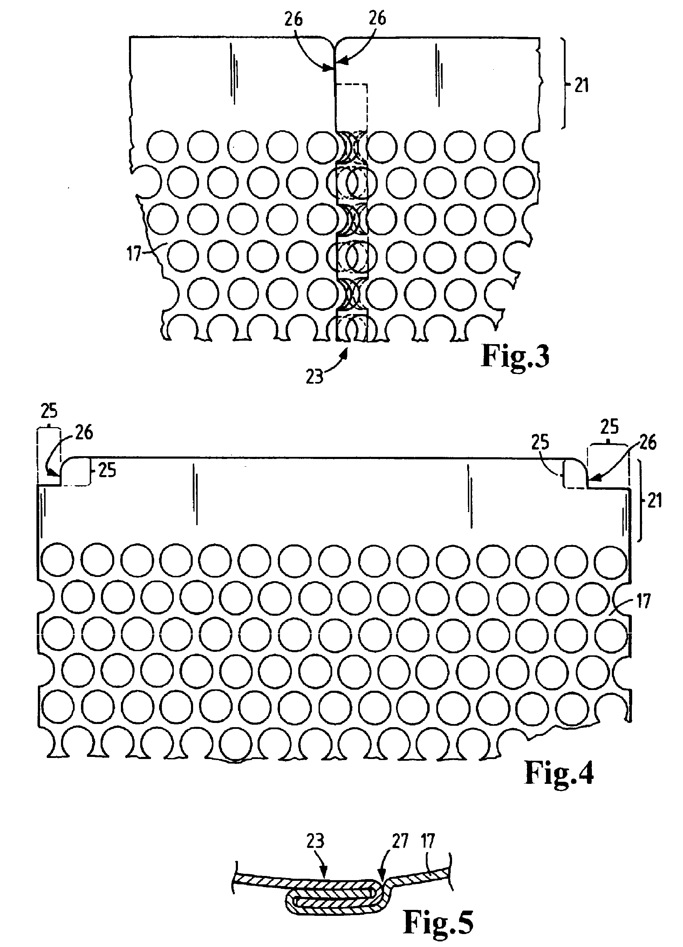

In Figur 3 ist ein ringförmig geschlossener Ausschnitt eines Außenmantels 17 gemäß einer der Figuren 1 und 2 dargestellt. In Figur 4 ist der Zuschnitt des Außenmantels 17 in der Abwicklung dargestellt. Der Figur 1 oder 2 entsprechende Bauteile sind mit gleichen Bezugszeichen versehen. Der Außenmantel 17 verfügt im stirnseitigen Bereich oberhalb des Längsfalzes 23 über einen ausgeklinkten Bereich 25, welcher als Ausnehmung ausgebildet ist. In diesem Bereich 25 wird der Außenmantel 17 nicht gefalzt, da hierzu kein Material zur Verfügung steht. Nach dem Biegen des Außenmantels 17, wird der Längsfalz 23 erzeugt. Durch das ineinandergreifen der Längskanten kommen die ausgeklinkten Bereiche 25 aneinander und bilden so eine Stoßkante 26. Durch den ausgeklinkten Bereich 25 wird eine Materialanhäufung vermieden, welche beim Umbördeln des Außenmantels 17 am Boden 20 zu Problemen führen würde.

In Figur 5 ist ein Längsfalz 23 im Schnitt dargestellt. Der Außenmantel 17 ist derart gebogen, dass sein Umfang einen Kreis bildet. Um ein zu starkes Verformen des Materials zu verhindern ist ein Zwickel 27 vorgesehen, welcher einen relativ weichen Übergang zwischen der Kreisform und dem Längsfalz 23 ermöglicht.

## Patentansprüche

1. Luftentölelement für Kompressoren, aufweisend einen Flansch (10), einen luftdurchlässigen, ringförmig geschlossenen Außenmantel (17), einen Boden (20) und ein Filtermedium, wobei der Außenmantel (17) unlösbar mit dem Flansch (10) verbunden ist, **dadurch gekennzeichnet, dass** die Verbindung zwischen dem Flansch (10) und dem Außenmantel (17) durch mechanische Umformung des Flansches bzw. des Außenmantels formschlüssig ausgebildet ist, wobei der Flansch (10) und der Außenmantel (17) aus einem korrosionsbeständigen Material mit einem Aluminium-Anteil bestehen.

2. Luftentölelement nach Anspruch 1, **dadurch gekennzeichnet, dass** die formschlüssige Verbindung zwischen dem Flansch (10) und dem Außenmantel (17) durch eine umlaufende Sicke (19) gebildet ist.

3. Luftentölelement nach Anspruch 1, **dadurch gekennzeichnet, dass** die formschlüssige Verbindung zwischen dem Flansch (10) und dem Außenmantel (17) durch partielle Clinch-Punkte (24) gebildet ist.

4. Luftentölelement nach einem der vorangehenden Ansprüche, **dadurch gekennzeichnet, dass** die Verbindung zwischen dem Flansch (10) und dem Außenmantel (17) leimdicht ausgebildet ist.

5. Luftentölelement nach einem der vorangehenden Ansprüche, **dadurch gekennzeichnet, dass** der Außenmantel (17) über einen Längsfalz (23) verfügt.

6. Luftentölelement nach Anspruch 5, **dadurch gekennzeichnet, dass** der Außenmantel (17) im Bereich des Längsfalzes (23) über einen ausgeklinkten Bereich (25) verfügt.

7. Luftentölelement nach einem der vorangehenden Ansprüche, **dadurch gekennzeichnet, dass** der Außenmantel (17) perforieret ist und im Bereich der Verbindung mit dem Flansch (10) perforationsfrei ausgeführt ist.

## Claims

1. Air de-oiling element for compressors, featuring a flange (10), an air permeable, annular closed outer case (17), a bottom (20) and a filter medium, the outer case (17) being connected undetachably with the flange (10), **characterized in that** the connection between the flange (10) and the outer case (17) is positive-fit by mechanically reshaping the flange or the outer case, the flange (10) and the outer case (17) consisting of a corrosion-resistant material with an aluminum content.

2. Air de-oiling element according to claim 1, **characterized in that** the positive fitting connection between the flange (10) and the outer case (17) is formed by a circumferential bead (19).

3. Air de-oiling element according to claim 1, **characterized in that** the positive fitting connection between the flange (10) and the outer case (17) is formed by partial rivet points (24).

4. Air de-oiling element according to one of the above claims, **characterized in that** the positive-fit connection between the flange (10) and the outer case (17) is glue-tight.

5. Air de-oiling element according to one of the above claims, **characterized in that** the outer case (17) has a longitudinal fold (23).

6. Air de-oiling element according to claim 5, **characterized in that** the outer case (17) has a notched section (25) in the area of the longitudinal fold (23).

7. Air de-oiling element according to one of the above claims, **characterized in that** the outer case (17) is perforated and realized without perforations in the area of the connection with the flange (10).

## Revendications

1. Elément de déshuilage de l'air pour compresseurs, présentant une bride (10), une gaine extérieure (17) en forme d'anneau fermé et perméable à l'air, un fond (20) et un milieu filtrant, la gaine extérieure (17) étant reliée de manière fixe avec la bride (10), **caractérisé en ce que** la liaison entre la bride (10) et la gaine extérieure (17) est exécutée de manière crabotée par remodelage mécanique de la bride ou de la gaine extérieure, la bride (10) et la gaine extérieure (17) étant constituées en un matériau résistant à la corrosion contenant une part d'aluminium.

2. Elément de déshuilage de l'air selon la revendication 1, **caractérisé en ce que** la liaison crabotée entre la bride (10) et la gaine extérieure (17) est formée par une moulure (19) circulaire.

3. Elément de déshuilage de l'air selon la revendication 1, **caractérisé en ce que** la liaison crabotée entre la bride (10) et la gaine extérieure (17) est formée par des points de rivetage (24) partiels.

4. Elément de déshuilage de l'air selon l'une des revendications précédentes, **caractérisé en ce que** la liaison entre la bride (10) et la gaine extérieure (17) est exécutée de sorte à être étanche à la colle.

5. Elément de déshuilage de l'air selon l'une des revendications précédentes, **caractérisé en ce que** la gaine extérieure (17) dispose d'un pli longitudinal (23).

6. Elément de déshuilage de l'air selon la revendication 5, **caractérisé en ce que** la gaine extérieure (17) dispose d'une partie entaillée (25) à proximité du pli longitudinal (23).

7. Elément de déshuilage de l'air selon l'une des revendications précédentes, **caractérisé en ce que** la gaine extérieure (17) est perforée et exécutée sans perforation dans la zone de la liaison avec la bride (10).
